# EUROPEAN PATENT SPECIFICATION

(11) **EP 0 355 879 B1**
(45) Date of publication and mention of the grant of the patent: **18.11.1993**
(21) Application number: 89201774.0
(22) Date of filing: 05.07.1989
(51) Int. Cl.: A47C 7/26

(54) **Chair upholstery set**
Polsterung für Sitze
Rembourrage pour sièges

(30) Priority: 26.08.1988 NL 8802105
(43) Date of publication of application: 28.02.1990
(73) Proprietor: EMSTA BREDA B.V., 4825 AR Breda (NL)
(72) Inventor: Scholte, Bartholomeus, NL-4824 EZ Breda (NL)
(74) Representative: Hooiveld, Arjen Jan Winfried

(56) References cited:
- EP-A- 0 190 064
- FR-A- 2 573 969
- FR-A- 2 592 334

## Description

The invention relates to an elastic upholstery set intended more in particular -but not exclusively- for the upholstering of chairs, seats, and the like such as used in, for instance, public buildings and in vehicles for public transport, whereby the elastic upholstery set is provided with at least one flexible layer of synthetic fibres - which layer is capable of withstanding incision -, as well as with a resilient armouring.

Such an elastic upholstery set is known from the French patent application No. 2.592.334. Furniture used in public buildings or in vehicles for public transport often forms a target for all sorts of hooliganism. The resultant damage inflicted with, for instance, a knife, is generally so serious that the furniture becomes unsuitable for further use. Such acts of hooliganism involve municipal authorities or other public bodies in great expenditure, inasmuch as furniture which has been so damaged and rendered unsuitable for further use has to be replaced -often as a whole. The elastic upholstery set disclosed in the above French patent application comprises an anti-wear top layer, a flexible layer of synthetic aramide fibres ("Kevlar"), a resilient armouring in the form of a metal knitting, as well as a water tight layer, for example made of polyurethane. The flexible layer of synthetic aramide fibres and the metal knitting are meant to be resistant to the impact of knives of hooligans.

An elastic upholstery set known from the Netherlands patent application No. 80.00287 consists of a relatively plastic, supple and thick upholstery material which has been armoured with a metallic grating so as to be resistant to the impact of knives in acts of hooliganism. This plastic, supple and thick upholstery material is made in polyvinyl chloride, whilst the grating consists of a layer of metallic spiral springs of the type used in interior-sprung mattresses. A drawback of this known elastic upholstery set is that in actual practice it has proved to be insufficiently resistant to the impact of knives in acts of hooliganism, because the plastic, supple and thick upholstery material can still be damaged with a knife from the outside, for instance, at certain spots between parts of the metallic spiral springs. A further disadvantage held against this known elastic upholstery set is that it does not withstand exposure to fire during acts of hooliganism. Although the polyvinyl chloride layers of the plastic, supple and thick upholstery material can be rendered non-flammable by an additional treatment, such a finish proves to be not only costly but in actual practice not entirely effective.

A drawback of the elastic upholstery set disclosed in the French patent application No. 2.592.334 is that in actual practice a person using the seat experiences hindrance from the metal knitting, making the seat less comfortable when used a longer period, whereas the resistant of this known upholstery set to the impact of knives in acts of hooligans is not fully satisfactory.

It is an object of the present invention to provide a comfortable elastic upholstery set which is resistant to the action of knives and fire, for instance in acts of hooliganism, and which can be manufactured inexpensively. To this end, an elastic upholstery set of the type mentioned hereinbefore is characterized according to the invention in that the elastic upholstery set comprises pressure-equalizing means. Accordingly, a very convenient upholstery set is provided, which is resistant to (for example) the impact of knives, due to the pressure-equalizing properties thereof.

One embodiment of an upholstery set according to the invention is characterized in that the resilient armouring is substantially formed by a resilient armouring layer, whereas the pressure-equalizing means are substantially formed by two pressure-equalizing layers between which the resilient armouring layer is sandwiched.

A further embodiment of an elastic upholstery set according to the invention is characterized in that the set is also provided with a flexible synthetic intermediate layer. This intermediate layer may, preferably, comprise a felt padding of aramide fibres, thereby enhancing the resistance of the elastic upholstery set according to the invention against the impact of, for instance, knives.

A further embodiment of an elastic upholstery set according to the invention is characterized in that the resilient armouring and the pressure-equalizing means are substantially formed by an armoured padding made of a foamed material. This armoured padding may, preferably, comprise a metallic wire-mesh reinforcement, so that a person using the seat, experiences no hindrance from the resilient armouring layer proper. This embodiment of an elastic upholstery set according to the inventon enhances the resistance against the impact of knives in acts of hooliganism.

The invention relates moreover to a chair or seat provided with an elastic upholstery set according to the invention.

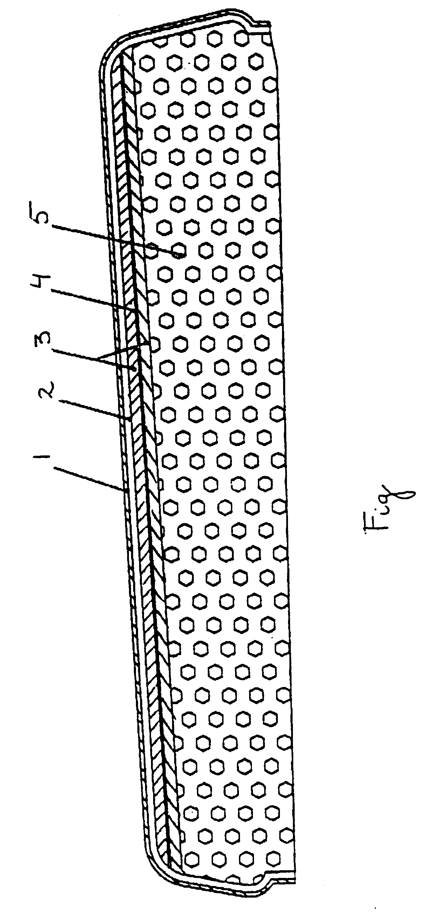

The invention will now be elucidated further with reference to the accompanying drawing, which represents a cross-section of an elastic upholstery set according to the invention.

In the figure the upholstery material of the elastic upholstery set according to the invention consists of a flexible layer 1 of aramide fibres of the type marketed, for instance, under the trade names Twaron and Kevlar. For reinforcement of the flexible layer 1, a flexible synthetic layer -for instance, a knitted one- may be applied thereon.

The figure also depicts a flexible synthetic inermediate layer 2, for instance a felt padding of aramide fibres. Sandwiched between two pressure-equalizing layers 3, there is also a resilient armouring layer 4 present, which prefereably consists of a metallic wire-mesh reinforcement layer. The pressure-equalizing layers 3 are intended to preclude discomfort in sitting, due to the resilient armouring layer 4 and may, for instance, contain horsehair or natural fibres which are also called hairlock/cocolock fibres by those skilled in the art. A foam padding 5 serves to impart greater comfort to the whole.

Obviously, an elastic upholstery set according to the invention may, in lieu of a separate armouring layer 4, layers 3 and a foam padding 5, be provided with an armoured padding made of a foamed material. Such an armoured foam padding may, for instance, comprise an integrated wire-mesh armouring.

An elastic upholstery set thus composed according to the invention is punctureproof and incombustible, whilst the flexible layer 1 of aramide fibres cannot be damaged by knife-thrusts.

## Claims

1. An elastic upholstery set intended more in particular -but not exclusively- for the upholstering of chairs, seats and the like such as used in, for instance public buildings and in vehicles for public transport, whereby the elastic upholstery set is provided with at least one flexible layer (1) of synthetic fibres - which layer is capable of withstanding incision -, as well as with a resilient armouring, characterized in that the elastic upholstery set comprises pressure-equalizing means.

2. An elastic upholstery set according to claim 1, characterized in that the resilient armouring is substantially formed by a resilient armouring layer (4), whereas the pressure-equalizing means are substantially formed by two pressure-equalizing layers (3) between which the resilient armouring layer (4) is sandwiched.

3. An elastic upholstery set according to claim 1 or 2, characterized in that the set is also provided with a flexible synthetic intermediate layer (2).

4. An elastic upholstery set according to claim 3, characterized in that the flexible synthetic intermediate layer (2) comprises a felt padding of, for instance, aramide fibres.

5. An elastic upholstery set according to claim 1, characterized in that the resilient armouring and the pressure-equalizing means are substantially formed by an armoured padding made of a foamed material.

6. An elastic upholstery set according to claim 5, characterized in that the armoured padding comprises an integrated wire-mesh reinforcement.

7. A chair or seat provided with an elastic upholstery set according to any one of the preceding claims.

## Patentansprüche

1. Eine elastische Polsterung insbesondere - nicht aber ausschließlich - für die Polsterung von Stühlen, Sitzen und dergleichen, wie sie beispielsweise in öffentlichen Gebäuden und in Fahrzeugen für den öffentlichen Verkehr verwendet werden, wobei die elastische Polsterung mit wenigstens einer flexiblen Schicht (1) aus synthetischen Fasern besteht, die gegenüber Einschnitten beständig ist, als auch einer nachgiebigen Bewehrung, dadurch gekennzeichnet, daß die elastische Polsterung Druckausgleichsmittel aufweist.

2. Eine elastische Polsterung nach Anspruch 1, dadurch gekennzeichnet, daß die nachgiebige Bewehrung im wesentlichen aus einer nachgiebige Bewehrungsschicht (4) besteht, während die Druckausgleichsmittel im wesentlichen durch zwei Druckausgleichsschichten (3) gebildet sind, zwischen denen die nachgiebige Bewehrungsschicht (4) eingeschlossen ist.

3. Eine elastische Polsterung nach Anspruch 1 oder 2, dadurch gekennzeichnet, daß diese weiter mit einer flexiblen synthetischen Zwischenschicht (2) versehen ist.

4. Eine elastische Polsterung nach Anspruch 3, dadurch gekennzeichnet, daß die flexible synthetische Zwischenschicht (2) eine Filzwattierung aus, beispielsweise, Aramidfasern aufweist.

5. Eine elastische Polsterung nach Anspruch 1, dadurch gekennzeichnet, daß die nachgiebige Bewehrung und die Druckausgleichsmittel im wesentlichen aus einer bewehrten Wattierung aus einem geschäumten Material gebildet sind.

6. Eine elastische Polsterung nach Anspruch 5, dadurch gekennzeichnet, daß die bewehrte Wattierung eine integrierte Drahtnetzverstärkung aufweist.

7. Stuhl oder Sitz, der mit einer elastischen Polsterung nach einem der vorangehenden Ansprüche versehen ist.

## Revendications

1. Ensemble de rembourrage élastique destiné plus particulièrement, mais non exclusivement, pour le rembourrage de chaises, sièges et analogues tels que ceux utilisés par exemple dans des édifices recevant le public et dans des véhicules pour transport en commun, de sorte que l'ensemble de rembourrage élastique comporte au moins une couche souple (1) de fibres synthétiques, laquelle couche est susceptible de résister à une incision, de même qu'un blindage élastique, caractérisé en ce que l'ensemble de rembourrage élastique comporte des moyens d'égalisation de pression.

2. Ensemble de rembourrage élastique selon la revendication 1, caractérisé en ce que le blindage élastique est sensiblement formé par une couche de blindage élastique (4), alors que les moyens d'égalisation de pression sont sensiblement formés par deux couches d'égalisation de pression (3) entre lesquelles se trouve disposée en sandwich la couche de blindage élastique (4).

3. Ensemble de rembourrage élastique selon la revendication 1 ou la revendication 2, caractérisé en ce que l'ensemble comporte également une couche intermédiaire de matière synthétique souple (2).

4. Ensemble de rembourrage élastique selon la revendication 3, caractérisé en ce que la couche intermédiaire en matière synthétique souple (2) comporte un garnissage de feutre constitué par exemple de fibres d'aramide.

5. Ensemble de rembourrage élastique selon la revendication 1, caractérisé en ce que le blindage élastique et les moyens d'égalisation de pression sont sensiblement réalisés par un garnissage blindé réalisé à partir d'un matériau en forme de mousse.

6. Ensemble de rembourrage élastique selon la revendication 5, caractérisé en ce que le garnissage blindé comporte un renforcement au moyen de mailles intégrées.

7. Chaise ou siège comportant l'ensemble de rembourrage élastique selon l'une quelconque des revendications précédentes.
